# FASCICULE DE BREVET EUROPEEN

(11) **EP 1 376 994 B1**
(45) Date de publication et mention de la délivrance du brevet: **28.02.2007**
(21) Numéro de dépôt: 03291426.9
(22) Date de dépôt: 13.06.2003
(51) Int. Cl.: H04M 1/05, H04M 1/60, H04M 1/677, H04M 1/03, H04M 1/23

(54) **Radiotéléphone portable et système de radiocommunication comportant un tel radiotéléphone**
Tragbares Funkgerät und Funkkommunikationsystem mit diesem Funkgerät
Portable radiotelephone and radiocommunication system comprising said radiotelephone

(30) Priorité: 25.06.2002 FR 0207858
(43) Date de publication de la demande: 02.01.2004
(73) Titulaire: Inventel Systèmes, 75005 Paris (FR)
(72) Inventeur: Olivier, Henri-Nicolas, 92300 Levallois (FR); Grau, Guy-Louis, 69006 Lyon (FR); Zhang, Peng, 94220 Charenton le Pont (FR); Pourriot, Martin, 94220 Charenton le Pont (FR); Devige, Fabrice, 92170 Vannes (FR)
(74) Mandataire: Kohrs, Martin

(56) Documents cités:
- DE-A- 19 836 594
- DE-U- 20 020 096
- US-A- 5 995 589
- US-A- 6 067 356
- PATENT ABSTRACTS OF JAPAN vol. 1997, no. 07, 31 juillet 1997 (1997-07-31) -& JP 09 064950 A (HITACHI LTD), 7 mars 1997 (1997-03-07)

## Description

La présente invention est relative aux radiotéléphones portables et aux systèmes de radiocommunication comportant de tels radiotéléphones

Plus particulièrement, l'invention concerne un radiotéléphone portable comportant au moins :
- une unité centrale électronique,
- un circuit radio d'émission et réception relié à au moins une antenne,
- un microphone,
- une face avant où débouche un haut-parleur,
- une tranche sensiblement perpendiculaire à la face avant,
- un clavier qui comprend au moins une touche multifonction,
- et un collier adapté pour passer autour du cou de l'utilisateur, ledit collier étant fixé au radiotéléphone portable de façon que ledit radiotéléphone portable se positionne automatiquement par gravité dans une position de repos lorsqu'il est porté autour du cou de l'utilisateur, avec son microphone débouchant au-dessus du haut-parleur,
l'unité centrale électronique étant adaptée pour :
- à réception d'un appel entrant, établir une communication bidirectionnelle lorsqu'un utilisateur appuie sur la touche multifonction,
- et lorsque l'utilisateur appuie sur la touche multifonction en l'absence d'appel entrant, appeler au moins une adresse téléphonique prédéterminée.

Les radiotéléphones portables de ce type sont bien adaptés pour être utilisés dans des conditions normales par des adultes en bonne santé. Mais de par leur relativement grande complexité, ils sont mal adaptés pour être utilisés en situation d'urgence et/ou par des malades, des personnes âgées dépendantes ou des enfants.

En particulier le document JP-A-09064950 décrit un radiotéléphone de ce type, qui nécessite toutefois d'être tenu en main, ce qui peut en rendre l'utilisation ardue notamment pour des personnes peu valides ou des enfants.

La présente invention a notamment pour but de pallier cet inconvénient.

A cet effet, selon l'invention, un radiotéléphone portable du genre en question est caractérisé en ce que le microphone débouche vers le haut dans la partie supérieure de la tranche du radiotéléphone lorsque ledit radiotéléphone est porté autour du cou de l'utilisateur, le microphone et le haut-parleur étant adaptés pour que l'utilisateur puisse utiliser le radiotéléphone pour communiquer de façon bidirectionnelle sans avoir à déplacer ledit radiotéléphone depuis sa position de repos lorsqu'il est porté autour du cou de l'utilisateur.

Grâce à ces dispositions, l'utilisation du radiotéléphone portable selon l'invention est particulièrement simple puisqu'il est directement utilisable lorsqu'il est pendu autour du cou de l'utilisateur. Ce radiotéléphone portable est donc bien adapté pour être utilisé dans des situations d'urgence et/ou par des malades, des personnes âgées dépendantes ou des enfants.

Dans des modes de réalisation préférés de l'invention, on peut éventuellement avoir recours en outre à l'une et/ou à l'autre des dispositions suivantes :
- l'unité centrale électronique est adaptée pour appeler séquentiellement et cycliquement plusieurs adresses téléphoniques appartenant à une liste prédéterminée, jusqu'à ce qu'une communication soit établie avec l'une de ces adresses téléphoniques, lorsque l'utilisateur appuie sur la touche multifonction en l'absence d'appel entrant ;
- l'unité centrale électronique est adaptée pour rappeler automatiquement une adresse téléphonique de ladite liste prédéterminée lorsqu'elle a appelé cette adresse téléphonique suite à un actionnement de la touche multifonction et que cette adresse était occupée ;
- la liste prédéterminée d'adresses téléphoniques comprend un nombre n d'adresses téléphoniques et l'unité centrale électronique est adaptée pour appeler une adresse téléphonique de rang k dans ladite liste lorsque l'utilisateur appuie p fois sur la touche multifonction, avec p=k modulo n ;
- l'unité centrale électronique est adaptée pour interrompre une communication établie ou un appel en cours lorsque l'utilisateur appuie sur la touche multifonction pendant une durée supérieure à une durée prédéterminés, ladite durée prédéterminée étant au moins égale à 1 s ;
- la face avant comprend la touche multifonction, le clavier ne comportant pas d'autre touche disposée sur ladite face avant ;
- le radiotéléphone portable comporte en outre une face arrière, à l'opposé de la face avant, cette face arrière comprenant des touches supplémentaires appartenant au clavier, lesquelles touches supplémentaires sont adaptées pour permettre à un utilisateur de composer un numéro de téléphone de son choix ;
- le radiotéléphone portable se présente sous la forme d'un médaillon ;
- l'unité centrale électronique est adaptée pour reconnaître au moins certains appels entrants, dits appels de télésurveillance, provenant d'au moins une adresse téléphonique prédéterminée, et lorsqu'elle identifie un appel de télésurveillance, établir automatiquement une communication avec cette adresse téléphonique prédéterminée sans prévenir l'utilisateur ;
- l'unité centrale électronique est adaptée pour activer le microphone et maintenir désactivé le haut-parleur lorsqu'elle déclenche automatiquement une communication suite à un appel de télésurveillance ;
- l'unité centrale électronique est adaptée pour émettre un signal d'identification prédéterminé lors de l'établissement d'une communication avec ladite au moins une adresse téléphonique prédéterminée lorsque l'utilisateur appuie sur la touche multifonction en l'absence d'appel entrant ;
- le radiotéléphone portable comporte une source d'énergie électrique autonome et l'unité centrale électronique est adaptée pour mesurer un niveau de charge de ladite source d'énergie et pour envoyer un message d'avertissement à une adresse prédéterminée lorsque le niveau de charge tombe en-dessous d'un niveau prédéfini.

Par ailleurs, l'invention a également pour objet un système de radiocommunication comprenant un radiotéléphone portable tel que défini ci-dessus et une base reliée à un réseau public et communiquant par voie hertzienne avec ledit radiotéléphone portable.

Avantageusement, le radiotéléphone portable comporte une source d'énergie électrique autonome et l'unité centrale électronique est adaptée pour mesurer un niveau de charge dé ladite source d'énergie et le communiquer à la base (à son initiative ou sur demande de la base), la base étant adaptée pour mémoriser ledit niveau de charge et le transmettre à une adresse téléphonique prédéterminée (à intervalles réguliers, ou sur appel de cette adresse qui peut par exemple être l'adresse d'un serveur de messagerie informatique).

Par ailleurs, la base peut être adaptée pour mémoriser des périodes au cours desquelles elle cesse d'être en liaison avec le radiotéléphone portable, et pour communiquer ces périodes à une adresse téléphonique prédéterminée (à intervalles réguliers, ou sur appel de cette adresse, ou encore lorsque la perte de liaison dépasse une durée prédéterminée).

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique d'un système de radiocommunication comprenant un radiotéléphone portable selon une forme de réalisation de l'invention,
- les figures 2 et 3 sont des vues en perspective montrant respectivement la face avant et la face arrière du radiotéléphone portable de la figure 1,
- la figure 4 est une vue de dessus du radiotéléphone portable des figures 2 et 3,
- et la figure 5 est un schéma bloc montrant une partie du circuit électronique du radiotéléphone portable des figures précédentes.

Sur les différentes figures, les mêmes références désignent des éléments identiques ou similaires.

Comme représenté sur la figure 1, l'invention concerne un radiotéléphone portable 1 qui est destiné à être porté en permanence par un utilisateur 2 pouvant être par exemple un malade, une personne âgée dépendante ou un enfant, de façon notamment à pouvoir passer des appels d'urgence.

Avantageusement, ce radiotéléphone portable 1 peut se présenter sous la forme d'un médaillon suspendu à un cordon 3 formant un collier, passé autour du cou de l'utilisateur 2.

Le radiotéléphone 1 peut par exemple faire partie d'un réseau de radiocommunication privé fonctionnant sous le protocole de radiocommunication DECT et communiquant avec une base fixe 4 qui peut par exemple être reliée par voie filaire ou autre, au réseau public commuté 5 (PUB) . La base fixe 4 peut par ailleurs, le cas échéant, servir de socle de recharge pour recharger les batteries du radiotéléphone 1 et/ou d'autres radiotéléphones 6 classiques appartenant au même réseau de radiocommunication privé.

On notera que le radiotéléphone 1 pourrait aussi bien fonctionner selon un autre protocole pour réseau de radiocommunication privé (par exemple le protocole BLUETOOTH), ou un protocole pour réseau de radiocommunication public (par exemple le protocole GSM ou le protocole UMTS).

Comme représenté sur les figures 2 à 4, le cordon 3 formant collier est de préférence fixé en deux points 7, 8 situés vers l'extrémité supérieure du radiotéléphone portable 1, de façon que ce radiotéléphone s'oriente automatiquement, par effet de gravité, avec la voie d'air 9 de son microphone orientée sensiblement vers la tête de l'utilisateur.

Dans l'exemple particulier considéré ici, le boîtier du radiotéléphone 1 comporte deux faces principales, savoir une face avant 10 et une face arrière 11 séparées l'une de l'autre par une tranche 12, et la voie d'air 9 donnant accès au microphone se trouve sur la tranche 12 du boîtier du radiotéléphone.

Comme représenté sur la figure 2, la face avant 10 du radiotéléphone, destinée à être orientée vers l'avant de l'utilisateur 2 lorsqu'il porte le radiotéléphone en collier, comporte en outre un haut-parleur 13, ou tout au moins une voie d'air donnant accès au haut-parleur du radiotéléphone. Grâce à cette disposition, où le haut-parleur 13 est disposé sensiblement à la perpendiculaire de la voie d'air 9 donnant accès au microphone, on évite ou tout au moins on limite fortement les interférences entre le haut-parleur et le microphone, ce qui permet d' obtenir une très bonne qualité de son.

Par ailleurs, comme représenté sur les figures 2 et 3, le radiotéléphone comporte en outre un clavier 14 qui comprend :
- d'une part, une touche multifonction 15 située sur la face avant 10 du radiotéléphone,
- et d'autre part, un ensemble de touches 16 de numérotation et d'appel, situé sur la face arrière 11 du radiotéléphone qui se trouve normalement contre la poitrine de l'utilisateur 2.

Comme représenté sur la figure 5, le radiotéléphone 1 peut comporter une unité centrale électronique 17 qui inclut par exemple un processeur en bande de base 18 (BBP) (incluant généralement lui-même plusieurs modules) relié le cas échéant à une mémoire externe 19. Le processeur 18 est relié à un circuit radio 20 d'émission et de réception (E/R), lui-même relié à au moins une antenne d'émission/réception 21.

Le processeur 18 est par ailleurs relié (directement ou le cas échéant par l'intermédiaire de circuits d'interface, non représentés ici pour plus de clarté):
- à un microphone 22 en communication avec la voie d'air 9 susmentionnée,
- au haut-parleur 13 décrit ci-dessus,
- au clavier 14 comprenant la touche multifonction 15 et l'ensemble de touches 16,
- et à une batterie 23, généralement rechargeable, dont le processeur 18 peut mesurer le niveau de charge.

Par ailleurs, la base fixe 4 peut comporter une unité centrale électronique 24 (UC) identique ou similaire à l'unité centrale 17 du radiotéléphone 1, laquelle unité centrale 24 est reliée à un circuit radio d'émission et de réception 25 (E/R) identique ou similaire au circuit 20 susmentionné et lui-même relié à une ou plusieurs antennes 26, l'unité centrale 24 étant par ailleurs reliée au réseau public commuté 5.

Le dispositif qui vient d'être décrit fonctionne comme suit.

Lors de la réception d'un appel entrant, il suffit à l'utilisateur 2 d'appuyer brièvement sur la touche multifonction 15 pour que l'unité centrale 17 décroche et établisse la communication bi-directionnelle avec la personne qui appelle.

Par ailleurs, lorsque l'utilisateur 2 souhaite effectuer un appel vers une adresse téléphonique comprise dans une liste prédéterminée qui est mémorisée dans la mémoire 19 de l'unité centrale 17, il lui suffit d'appuyer brièvement sur la touche multifonction 15, après quoi l'unité centrale 17 appelle séquentiellement et cycliquement les différentes adresses téléphoniques incluses dans la liste prédéterminée en question, jusqu'à ce que la communication puisse être établie avec l'un de ces numéros. L'utilisateur 2 peut ensuite dialoguer avec son interlocuteur au numéro appelé. Ce mode de fonctionnement est particulièrement utile pour les appels d'urgence.

Dans ce mode de fonctionnement, lorsqu'une adresse téléphonique appelée par l'unité centrale 17 est occupée, l'unité centrale 17 peut le cas échéant être adaptée pour rappeler cette adresse téléphonique après un intervalle de temps prédéterminé, avant de passer à l'adresse téléphonique suivante de la liste qu'elle a en mémoire.

On notera que, le cas échéant, la liste en question pourrait être réduite à une seule adresse téléphonique.

Lorsque cette liste contient plusieurs adresses, l'utilisateur 2 peut par ailleurs choisir l'adresse téléphonique qu'il souhaite appeler au sein de la liste prédéterminée d'adresses téléphoniques. A cet effet, lorsque l'utilisateur 2 veut joindre une adresse téléphonique qui occupe le rang k dans la liste de n adresses téléphoniques, il lui suffit d'appuyer brièvement p fois sur la touche multifonction 15, où P = k modulo n, n étant un nombre entier supérieur à 1.

L'unité centrale 17 est également adaptée pour interrompre la communication en cours, ou interrompre une numérotation en cours, lorsque l'utilisateur appuie longuement sur la touche multifonction 15, par exemple pendant une durée supérieure à 1 seconde, voire pendant une durée supérieure à 2 ou 3 secondes.

Par ailleurs, le radiotéléphone 1 est adapté pour fonctionner également selon un mode de fonctionnement classique, en utilisant l'ensemble de touches 16 situées au dos du boîtier du radiotéléphone, pour appeler d' autres numéros de téléphone que ceux inclus dans la liste d'adresses téléphoniques.

Avantageusement, le dispositif selon l'invention peut être utilisé pour surveiller à distance l'utilisateur 2 qui porte le radiotéléphone 1. A titre d'exemple, le radiotéléphone 1 peut ainsi servir à ce que des personnels médicaux surveillent à distance l'état de santé d'un patient.

A cet effet, l'unité centrale électronique 17 peut être adaptée pour identifier au moins certains appels entrants, dits appels de télésurveillance. Lorsqu'elle identifie un tel appel de télésurveillance, l'unité centrale 17 établit automatiquement la communication avec le numéro appelant sans prévenir l'utilisateur et notamment sans faire sonner ou vibrer le radiotéléphone 1. Dans ce cas, l'unité centrale 17 peut être adaptée pour permettre au personnel de surveillance, uniquement d' écouter l'utilisateur 2 par l'intermédiaire du microphone 22, sans pouvoir parler à l'utilisateur 2. Autrement dit, dans ce cas, l'unité centrale 17 peut activer le microphone 22 mais maintenir désactivé le haut-parleur 13.

L'unité centrale 17 peut également être adaptée pour émettre un signal d'identification prédéterminé, par exemple un signal de type "DTMF" ou autre, lors de l'établissement d'une communication avec l'une des adresses téléphoniques de la liste prédéterminée, de façon à permettre d'identifier à coup sûr et rapidement l'utilisateur 2 qui vient de lancer un appel d'urgence.

L'unité centrale 17 peut aussi être adaptée pour mesurer le niveau de charge de sa batterie 23 et envoyer un message d'avertissement à une adresse téléphonique prédéterminée, par exemple à un serveur S auprès d'un prestataire de services de télésurveillance, lorsque le niveau de charge de cette batterie 23 tombe en dessous d'un niveau prédéfini. Le prestataire de services en question peut alors vérifier la situation et s'assurer que le radiotéléphone 1 est bien mis à recharger en temps utile.

Le cas échéant, les informations concernant le niveau de charge de la batterie 23 peuvent être transmises à la base fixe 4 par le radiotéléphone 1 (par exemple à intervalles de temps réguliers), après quoi la base fixe communique lesdites informations de charge de la batterie, par l'intermédiaire du réseau public commuté 5, au serveur S susmentionné (cette communication peut être régulière ou non, et initiée soit par la base 4, soit par le serveur S).

Enfin, l'unité centrale 24 de la base fixe 4 peut détecter les périodes où le radiotéléphone 1 est hors de portée radio de ladite base fixe. Ces périodes peuvent avantageusement être mémorisées par l'unité centrale 24 de la base fixe 4 et communiquées au serveur S susmentionné (régulièrement ou selon certains critères, par exemple si la période de perte de liaison dépasse une durée prédéterminée). Dans ce cas comme dans le cas précédent, la communication d'informations vers le serveur S peut s'effectuer soit sur l'initiative de la base fixe 4, soit sur appel du serveur S.

## Revendications

1. Radiotéléphone portable comprenant au moins :
- une unité centrale électronique (17),
- un circuit radio (20) d'émission et réception relié à au moins une antenne (21),
- une face avant (10) où débouche un haut-parleur (13),
- une tranche (12) sensiblement perpendiculaire à la face avant,
- un clavier (14) qui comprend au moins une touche (15),
- et un collier adapté pour passer autour du cou de l'utilisateur, ledit collier étant fixé au radiotéléphone portable (1) de façon que ledit radiotéléphone portable se positionne automatiquement par gravité dans une position de repos lorsqu'il est porté autour du cou de l'utilisateur, l'unité centrale électronique (17) étant adaptée pour :
- à réception d'un appel entrant, établir une communication lorsqu'un utilisateur appuie sur une touche (15),
- et lorsque l'utilisateur appuie sur une touche (15) en l'absence d'appel entrant, appeler au moins une adresse téléphonique prédéterminée,
**caractérisé en ce qu'**un microphone (22) est situé sur ledit radiotéléphone, le microphone (22) et le haut-parleur (10) étant adaptés pour que l'utilisateur puisse utiliser le radiotéléphone pour communiquer sans avoir à déplacer ledit radiotéléphone depuis sa position de repos, lorsqu'il est porté autour du cou de l'utilisateur.

2. Radiotéléphone selon la revendication 1, **caractérisé en ce que** ladite touche (15) est multifonction.

3. Radiotéléphone selon la revendication 1 ou 2, **caractérisé en ce que** la communication, à réception d'un appel entrant, est bidirectionnelle.

4. Radiotéléphone selon la revendication 1, 2, ou 3 **caractérisé en ce que**, lorsque l'utilisateur utilise le radiotéléphone pour communiquer sans avoir à déplacer ledit radiotéléphone depuis sa position de repos, lorsqu'il est porté autour du cou de l'utilisateur, la communication est bidirectionnelle.

5. Radiotéléphone selon l'une quelconque des revendications précédentes, **caractérisé en ce que** le microphone (22) débouche au dessus du haut parleur.

6. Radiotéléphone selon l'une quelconque des revendications précédentes, **caractérisé en ce que** le microphone (22) débouche vers le haut dans la partie supérieure (12) de la tranche du radiotéléphone lorsque ledit radiotéléphone est porté autour du cou de l'utilisateur.

7. Radiotéléphone selon l'une quelconque des revendications précédentes, dans lequel l'unité centrale électronique (17) est adaptée pour appeler séquentiellement et cycliquement plusieurs adresses téléphoniques appartenant à une liste prédéterminée, jusqu'à ce qu'une communication soit établie avec l'une de ces adresses téléphoniques, lorsque l'utilisateur appuie sur une touche (15) en l'absence d'appel entrant.

8. Radiotéléphone portable selon la revendication 7, dans lequel l'unité centrale électronique (17) est adaptée pour rappeler automatiquement une adresse téléphonique de ladite liste prédéterminée lorsqu'elle a appelé cette adresse téléphonique suite à un actionnement d'une touche (15) et que cette adresse téléphonique était occupée.

9. Radiotéléphone selon la revendication 2 ou la revendication 8, dans lequel la liste prédéterminée d'adresses téléphoniques comprend un nombre n d'adresses téléphoniques et l'unité centrale électronique (17) est adaptée pour appeler une adresse téléphonique de rang k dans ladite liste lorsque l'utilisateur appuie p fois sur une touche (15), avec p=k modulo n.

10. Radiotéléphone selon l'une quelconque des revendications précédentes, dans lequel l'unité centrale électronique (17) est adaptée pour interrompre une communication établie ou un appel en cours lorsque l'utilisateur appuie sur une touche (15) pendant une durée supérieure à une durée prédéterminés, ladite durée prédéterminée étant au moins égale à 1 s.

11. Radiotéléphone selon l'une quelconque des revendications précédentes, dans laquelle la face avant (10) comprend une touche (15), le clavier (14) ne comportant pas d'autre touche disposée sur ladite face avant.

12. Radiotéléphone selon la revendication 11, comportant en outre une face arrière (11), à l'opposé de la face avant (10), cette face arrière comprenant des touches supplémentaires (16) appartenant au clavier (14), lesquelles touches supplémentaires sont adaptées pour permettre à un utilisateur de composer un numéro de téléphone de son choix.

13. Radiotéléphone selon l'une quelconque des revendications précédentes, se présentant sous la forme d'un médaillon.

14. Radiotéléphone selon l'une quelconque des revendications précédentes, dans lequel l'unité centrale électronique (17) est adaptée pour :
- reconnaître au moins certains appels entrants, dits appels de télésurveillance, provenant d'au moins une adresse téléphonique prédéterminée,
- et lorsqu'elle identifie un appel de télésurveillance, établir automatiquement une communication avec cette adresse téléphonique prédéterminée sans prévenir l'utilisateur

15. Radiotéléphone selon la revendication 14, dans lequel l'unité centrale électronique (17) est adaptée pour activer le microphone (22) et maintenir désactivé le haut-parleur (13) lorsqu'elle déclenche automatiquement une communication suite à un appel de télésurveillance.

16. Radiotéléphone selon l'une quelconque des revendications précédentes, dans lequel l'unité centrale électronique (17) est adaptée pour émettre un signal d'identification prédéterminé lors de l'établissement d'une communication avec ladite au moins une adresse téléphonique prédéterminée lorsque l'utilisateur appuie sur une touche (15) en l'absence d'appel entrant.

17. Radiotéléphone selon l'une quelconque des revendications précédentes, comportant une source d'énergie électrique autonome (23) et dans lequel l'unité centrale électronique (17) est adaptée pour mesurer un niveau de charge de ladite source d'énergie et pour envoyer un message d'avertissement à une adresse prédéterminée lorsque le niveau de charge tombe en-dessous d'un niveau prédéfini.

18. Système de radiocommunication comprenant un radiotéléphone portable (1) selon l'une quelconque des revendications précédentes et une base (4) reliée à un réseau public et communiquant par voie hertzienne avec ledit radiotéléphone portable.

19. Système de radiocommunication selon la revendication 18, dans lequel le radiotéléphone portable comporte une source d'énergie électrique autonome (23) et l'unité centrale électronique (17) du radiotéléphone est adaptée pour mesurer un niveau de charge de ladite source d'énergie et le communiquer à la base (4), la base étant adaptée pour mémoriser ledit niveau de charge et le transmettre à une adresse téléphonique prédéterminée.

20. Système de radiocommunication selon la revendication 18 ou la revendication 19, dans lequel la base (4) est adaptée pour mémoriser des périodes au cours desquelles elle cesse d'être en liaison avec le radiotéléphone portable (1), et pour communiquer ces périodes à une adresse téléphonique prédéterminée.

## Claims

1. Portable radiotelephone comprising at least:
- a central processing unit (17),
- a transmit and receive radio circuit (20) connected to at least one antenna (21),
- a front face (10) where a speaker emerges (13),
- a section (12) substantially perpendicular to the front face,
- a keypad (14) that comprises at least one key (15),
- and a necklace designed for placing around the neck of a user, the said necklace being fixed to the portable radiotelephone (1) in such a way that the said portable radiotelephone positions itself automatically by gravity in a rest position when it is worn around the neck of a user,
the central processing unit (17) being adapted to:
- on receiving an incoming call, establish a communication when a user presses a key (15),
- and when the user presses a key (15) when there is no incoming call, to call at least one predetermined telephone address,
**characterized in that** a microphone (22)is located on the radiotelephone,
and the microphone (22) and the speaker (10) are designed to let a user use the radiotelephone to communicate without having to move said radiotelephone from its rest position when it is worn around the neck of the user.

2. Radiotelephone according to claim 1, **characterized in that** said key (15) is multifunction.

3. Radiotelephone according to claim 1 or 2, **characterized in that** the communication, on receiving an incoming call, is bidirectional.

4. Radiotelephone according to claim 1, 2 or 3, **characterized in that**, when a user uses the radiotelephone to communicate without having to move said radiotelephone from its rest position, when it is worn around the neck of the user, the communication is bidirectional.

5. Radiotelephone according to one of the preceding claims, **characterized in that** the microphone (22) emerges above the speaker.

6. Radiotelephone according to one of the preceding claims, **characterized in that** the microphone (22) emerges upwards in the upper section (12) of the radiotelephone when said radiotelephone is worn around the neck of the user.

7. Radiotelephone according to one of the preceding claims, in which the central processing unit (17) is adapted to sequentially and cyclically call several telephone addresses belonging to a predetermined list, until a communication is established with one of these telephone addresses, when the user presses a key (15) when there is no incoming call.

8. Portable radiotelephone according to Claim 7, in which the central processing unit (17) is adapted to automatically call back a telephone address of the said predetermined list when the central processing unit called this telephone address after operation of one key (15) and when this telephone address was busy.

9. Radiotelephone according to Claim 2 or Claim 8, in which the predetermined list of telephone addresses comprises a number n of telephone addresses and the central processing unit (17) is adapted to call a telephone address of position k in the said list when the user presses a key (15) p times, where p=k modulo n.

10. Radiotelephone according to one of the preceding claims, in which the central processing unit (17) is adapted to interrupt an established communication or an in-progress call when the user presses a key (15) for a duration greater than a predetermined duration, the said predetermined duration being at least equal to 1 s.

11. Radiotelephone according to one of the preceding claims, in which the front face (10) includes a key (15), the keypad (14) not including any other key arranged on the said front face.

12. Radiotelephone according to Claim 11, additionally comprising a rear face (11), on the side opposite the front face (10), this rear face comprising additional keys (16) belonging to the keypad (14), which additional keys are designed to allow a user to dial a telephone number of his choice.

13. Radiotelephone according to one of the preceding claims, taking the form of a medallion.

14. Radiotelephone according to one of the preceding claims, in which the central processing unit (17) is adapted to:
- recognize at least certain incoming calls, referred to as telemonitoring calls, from at least one predetermined telephone address,
- and when the central processing unit identifies a telemonitoring call, to automatically establish a communication with this predetermined telephone address without notifying the user.

15. Radiotelephone according to Claim 14, in which the central processing unit (17) is adapted to activate the microphone (22) and keep the speaker (13) deactivated when the said central processing unit automatically activates a communication after a telemonitoring call.

16. Radiotelephone according to one of the preceding claims, in which the central processing unit (17) is adapted to transmit a predetermined identification signal when a communication is being established with the said at least one predetermined telephone address when the user presses a key (15) when there is no incoming call.

17. Radiotelephone according to one of the preceding claims, comprising an independent electrical power source (23) and in which the central processing unit (17) is adapted to measure a charge level of the said power source and to send a warning message to a predetermined address when the charge level falls to below a predefined level.

18. Radiocommunication system comprising a portable radiotelephone (1) according to one of the preceding claims and a base station (4) connected to a public network and communicating by wireless link with the said portable radiotelephone.

19. Radiocommunication system according to Claim 18, in which the portable radiotelephone includes an independent electrical power source (23) and the central processing unit (17) of the radiotelephone is adapted to measure a charge level of the said power source and to communicate the charge level to the base station (4), the base station being designed to memorize the said charge level and to transmit it to a predetermined telephone address.

20. Radiocommunication system according to Claim 18 or claim 19, in which the base station (4) is designed to memorize periods during which it stops being in communication with the portable radiotelephone (1), and to communicate these periods to a predetermined telephone address.

## Patentansprüche

1. Tragbares Funkgerät mit mindestens:
- einer elektronischen Zentraleinheit (17),
- einem mit mindestens einer Antenne (21) verbundenen Funk-Sende- und Empfangsschaltkreis (20),
- einer Vorderseite (10), in die ein Lautsprecher (13) mündet,
- einem im wesentlichen senkrecht zu der Vorderseite verlaufenden Rand (12),
- einer Tastatur (14), die mindestens eine Taste (15) umfasst und
- einem Halsband, das angepasst ist, um um den Hals des Benutzers gelegt zu werden, wobei das Halsband derart an dem tragbaren Funkgerät (1) befestigt ist, dass das tragbare Funkgerät sich automatisch durch die Schwerkraft in eine Ruhestellung positioniert, wenn es um den Hals des Benutzers getragen wird, wobei die elektronische Zentraleinheit (17) eingerichtet ist, um
- bei Empfang eines eingehenden Anrufs eine Verbindung herzustellen, wenn ein Benutzer eine Taste (15) drückt, und
- mindestens eine vorbestimmte Telefonadresse anzurufen, wenn der Benutzer ohne eingehenden Anruf eine Taste (15) drückt,
**dadurch gekennzeichnet, dass** ein Mikrofon (22) auf dem Funkgerät angeordnet ist, wobei das Mikrofon (22) und der Lautsprecher (10) so eingerichtet sind, damit der Benutzer das Funkgerät benutzen kann, um zu kommunizieren, ohne das Funkgerät aus seiner Ruhestellung bewegen zu müssen, wenn es um den Hals des Benutzers getragen wird.

2. Funkgerät nach Anspruch 1, **dadurch gekennzeichnet, dass** die Taste (15) eine Multifunktionstaste ist.

3. Funkgerät nach Anspruch 1 oder 2, **dadurch gekennzeichnet, dass** die Verbindung bei Empfang eines eingehenden Anrufs bidirektional ist.

4. Funkgerät nach Anspruch 1, 2 oder 3, **dadurch gekennzeichnet, dass** die Verbindung bidirektional ist, wenn der Benutzer das Funkgerät benutzt, um zu kommunizieren, ohne das Funkgerät aus seiner Ruhestellung bewegen zu müssen, wenn es um den Hals des Benutzers getragen wird.

5. Funkgerät nach einem beliebigen der vorhergehenden Ansprüche, **dadurch gekennzeichnet, dass** das Mikrophon (22) über dem Lautsprecher (13) mündet.

6. Funkgerät nach einem beliebigen der vorhergehenden Ansprüche, **dadurch gekennzeichnet, dass** das Mikrophon (22) nach oben in den oberen Abschnitt (12) des Randes des Funkgeräts mündet, wenn das Funkgerät um den Hals des Benutzers getragen wird.

7. Funkgerät nach einem beliebigen der vorhergehenden Ansprüche, bei dem die elektronische Zentraleinheit (17) angepasst ist, um mehrere zu einer vorbestimmten Liste gehörende Telefonadressen sequentiell und zyklisch anzurufen, bis eine Verbindung mit einer der Telefonadressen hergestellt ist, wenn der Benutzer ohne eingehenden Anruf eine Taste (15) drückt.

8. Tragbares Funkgerät nach Anspruch 7, bei dem die elektronische Zentraleinheit (17) angepasst ist, um eine Telefonadresse der vorbestimmten Liste erneut automatisch anzurufen, wenn sie diese Telefonadresse infolge einer Betätigung einer Taste (15) angerufen hat und diese Telefonadresse besetzt war.

9. Funkgerät nach Anspruch 2 oder nach Anspruch 8, bei dem die vorbestimmte Liste von Telefonadressen eine Anzahl n von Telefonadressen umfasst und die elektronische Zentraleinheit (17) eingerichtet ist, um eine Telefonadresse k-ter Ordnung in der Liste anzurufen, wenn der Benutzer p Mal eine Taste (15) drückt, wobei p = k modulo n.

10. Funkgerät nach einem der vorhergehenden Ansprüche, bei dem die elektronische Zentraleinheit (17) eingerichtet ist, um eine hergestellte Verbindung oder einen laufenden Anruf zu unterbrechen, wenn der Benutzer eine Taste (15) während einer Zeitdauer drückt, die eine vorbestimmte Zeitdauer übersteigt, wobei die vorbestimmte Zeitdauer mindestens gleich 1 s ist.

11. Funkgerät nach einem der vorhergehenden Ansprüche, bei dem die Vorderseite (10) eine Taste (15) umfasst, wobei die Tastatur (14) keine weitere, auf der Vorderseite angeordnete Taste aufweist.

12. Funkgerät nach Anspruch 11, das ferner eine zu der Vorderseite (10) entgegengesetzt angeordnete Rückseite (11) aufweist, wobei diese Rückseite zusätzliche, zu der Tastatur (14) gehörende Tasten (16) umfasst, die eingerichtet sind, um einem Benutzer das Wählen einer Telefonnummer seiner Wahl zu ermöglichen.

13. Funkgerät nach einem beliebigen der vorhergehenden Ansprüche, das sich in Form eines Medaillons darstellt.

14. Funkgerät nach einem beliebigen der vorhergehenden Ansprüche, bei dem die elektronische Zentraleinheit (17) eingerichtet ist, um
- mindestens bestimmte eingehende Anrufe - so genannte Fernüberwachungsrufe - zu erkennen, die von mindestens einer vorbestimmten Telefonadresse stammen, und
- um eine Verbindung mit dieser vorbestimmten Telefonadresse automatisch herzustellen, ohne den Benutzer zu warnen, wenn sie einen Fernüberwachungsruf identifiziert.

15. Funkgerät nach Anspruch 14, bei dem die elektronische Zentraleinheit (17) eingerichtet ist, um das Mikrofon (22) zu aktivieren und den Lautsprecher (13) deaktiviert zu halten, wenn sie infolge eines Fernüberwachungsrufs eine Verbindung automatisch auslöst.

16. Funkgerät nach einem beliebigen der vorhergehenden Ansprüche, bei dem die elektronische Zentraleinheit (17) eingerichtet ist, um bei der Herstellung einer Verbindung mit der mindestens einen vorbestimmten Telefonadresse ein vorbestimmtes Identifikationssignal zu senden, wenn der Benutzer ohne eingehenden Anruf eine Taste (15) drückt.

17. Funkgerät nach einem beliebigen der vorhergehenden Ansprüche, welches eine autonome elektrische Energiequelle (23) aufweist und bei dem die elektronische Zentraleinheit (17) eingerichtet ist, um einen Ladungsstand der Energiequelle zu messen und eine Warnmeldung an eine vorbestimmte Adresse zu senden, wenn der Ladungszustand ein vorbestimmtes Niveau unterschreitet.

18. Funkkommunikationssystem mit einem tragbaren Funkgerät (1) nach einem beliebigen der vorhergehenden Ansprüche und einer Basis (4), die mit einem öffentlichen Netzwerk verbunden ist und per Funk mit dem tragbaren Funkgerät kommuniziert.

19. Funkkommunikationssystem nach Anspruch 18, bei dem das tragbare Funkgerät eine autonome elektrische Energiequelle (23) umfasst und die elektronische Zentraleinheit (17) des Funkgeräts eingerichtet ist, um einen Ladungsstand der Energiequelle zu messen und ihn der Basis (4) mitzuteilen, wobei die Basis eingerichtet ist, um den Ladungsstand zu speichern und an eine vorbestimmte Telefonadresse zu übermitteln.

20. Funkkommunikationssystem nach Anspruch 18 oder nach Anspruch 19, bei dem die Basis (4) eingerichtet ist, um Zeiträume zu speichern, während deren die Verbindung zwischen ihr und dem tragbaren Funkgerät (1) nicht mehr besteht, und um diese Zeiträume an eine vorbestimmte Telefonadresse mitzuteilen.
